**Europäisches Patentamt**

**European Patent Office**

**Office européen des brevets**

(19)

(11) Veröffentlichungsnummer: **0 056 935**

**A1**

(12)

# EUROPÄISCHE PATENTANMELDUNG

(21) Anmeldenummer: **82100101.3**

(22) Anmeldetag: **08.01.82**

(51) Int. Cl.³: **B 29 J 5/02**

(30) Priorität: **23.01.81 DE 3102180**

(43) Veröffentlichungstag der Anmeldung:
**04.08.82 Patentblatt 82/31**

(84) Benannte Vertragsstaaten:
**AT BE CH FR IT LI LU NL**

(71) Anmelder: **MORALT Holzwerkstoffe GmbH & Co. KG**
**Lenggrieser Strasse 52-54**
**D-8170 Bad Tölz(DE)**

(72) Erfinder: **Menges, Eduard**
**Jahnstrasse 27**
**D-8170 Bad Tölz(DE)**

(74) Vertreter: **Berg, Wilhelm, Dr. et al,**
**Dr. Berg, Dipl.-Ing. Stapf, Dipl.-Ing. Schwabe, Dr. Dr.**
**Sandmair Mauerkircherstrasse 45**
**D-8000 München 80(DE)**

(54) Verfahren zur Herstellung von Holzwerkstoff-Formkörpern.

(57) Verfahren zur Herstellung von Holzwerkstoff-Formkörpern unter Behandlung kleinteiligen Holzmaterials mit kolloidalen wäßrigen Lösungen oder Dispersionen härtbarer Kunstharze, Verformen des behandelten Materials und Aushärten unter Hitze und Druck, wobei die wäßrigen Kunstharzlösungen oder -Dispersionen anorganische und/oder organische Füllstoffe in feinverteilter Form enthalten.

EP 0 056 935 A1

Anwaltsakte 50 232

-1-

Die Erfindung betrifft ein Verfahren zur Herstellung von Holzwerkstoff-Formkörpern unter Behandlung kleinteiligen Holzmaterials mit kolloidalen wässrigen Lösungen oder Dispersionen härtbarer Kunstharzbindemittel, Verformen des behandelten kleinteiligen Materials und Aushärten unter Hitze und Druck.

Holzwerkstoff-Formkörper unterschiedlichster Form und Zusammensetzung sind seit Jahrzehnten bekannt. Sie werden in großem Umfang in vielen Bereichen, namentlich im Ausbaugewerbe, in der Möbelindustrie, usw.,häufig anstelle von Vollholz, benutzt. Holzwerkstoff-Formkörper werden aus kleinteiligem Holzmaterial bzw. kleinteiligem Material verholzten pflanzlichen Ursprungs hergestellt. Das kleinteilige Material wird nach Zugabe von Bindemittel verformt und dann verfestigt. Die Erfindung befaßt sich vor allem mit der Herstellung von Holzspanformkörpern, wie beispielsweise Spanplatten. Die Herstellung der Holzwerkstoff-Formkörper ist allgemein bekannt und soll nachfolgend kurz anhand der Spanplattenherstellung erläutert werden. Holzspäne, die beispielsweise

☎ (089) 98 82 72
98 82 73
98 82 74
98 33 10

Telegramme.
BERGSTAPFPATENT München
TELEX·
0524 560 BERG d

Bankkonten Hypo-Bank München 4410122850
(BLZ 700 20 011) Swift Code HYPO DE MM
Bayer Vereinsbank München 453 100 (BLZ 700 202 70)

aus einer Zerspanungsanlage erhalten wurden, werden getrocknet und mit einer wässrigen Leimflotte, im allgemeinen einem härtbaren Kunstharzbindemittel in einem wässrigen Träger, beispielsweise in Bedüsungsanlagen oder in hochtourigen Turbomischern behandelt.

Die so mit Bindemitteln benetzten Späne werden zu Spankuchen geformt und der Kuchen bei Temperaturen von etwa 140 - 210° C und Drücken von etwa 20 - 35 kp/cm$^2$ verformt. Die erhaltenen Formkörper werden dann auf das gewünschte Maß geschliffen und zur Einstellung des Feuchtigkeitsgleichgewichts und Nachhärtung abgelagert.

Von ganz erheblichem Einfluß auf die Qualität der Holzspanformkörper, insbesondere auf die mechanischen Eigenschaften wie Querzugfestigkeit, Biegefestigkeit, Abhebefestigkeit einschließlich Quellwert, ist die einwandfreie Verleimung. Aus wirtschaftlichen, aber auch aus technischen Gründen (z.B. Gefahr der übermäßigen Formaldehydausdunstung der fertigen Formkörper), wird die Verwendung einer möglichst geringen Menge Bindemittel angestrebt. Andererseits soll das Bindemittel aber möglichst gleichmäßig über die Oberfläche aller Späne verteilt sein. Je kleiner die Teilchen und damit je größer die Oberfläche, umso problematischer wird die Gleichmäßigkeit der Benetzung. Eine optimale Verteilung relativ geringer Mengen an Kunstharzbindemitteln ließe sich am einfachsten durch Verwendung großer Mengen wässriger Lösungen bzw. Dispersionen, die hinsichtlich des Festharzgehalts entsprechend niedrig konzentriert sind, erreichen, d.h. durch Verwendung hoch verdünnter wässriger Bindemittel-Lösungen oder -Dispersionen. Der Anwendung solcher hochverdünnter wässriger Zubereitungen stehen in der Praxis jedoch erhebliche Hindernisse im Wege.

So lassen sich diese Kunstharz-Lösungen bzw. -Dispersionen entsprechend dem jeweiligen Kondensationsgrad des Kunstharzes nicht unbeschränkt verdünnen. Außerdem werden mit hochverdünnten Lösungen große Mengen Wasser in das Spänematerial eingebracht. Ein solches Spänematerial führt bei der Heißverpressung zu übermäßiger Dampfentwicklung, was Anlaß zu Platzern, verschlechterter Abhebefestigkeit und sonstigen verfahrens- und produkttechnischen Störungen gibt. Eine Trocknung des mit der wässrigen Kunstharz-Bindemittel-Flotte imprägnierten Spänematerials, um wenigstens eine Teilentfernung des Wassers zu erreichen, ist aus wirtschaftlichen und technischen Gründen; einerseits wegen des erheblichen Aufwands an Energie, andererseits wegen der dabei eintretenden Weiterkondensation der Kunstharz-Bindemittel unter entsprechender Verringerung der Bindefähigkeit, nicht möglich. Zudem tritt bei Verwendung hochverdünnter Bindemittelflotten ein als Wegschlagen bezeichneter Effekt ein. Darunter versteht man die Erscheinung, daß bei höher verdünnten Leimflotten das Kunstharz-Bindemittel nicht mehr auf der Spanoberfläche bleibt, sondern in das Innere des Spans wegsackt. Damit geht dieser Anteil des Kunstharz-Bindemittels für die Verleimung der Späne untereinander verloren.

Eine befriedigende Lösung, welche es erlauben würde, bei den aus verschiedenen Gründen gebotenen geringen Mengen an Kunstharz-Bindemitteln (Festharz) eine optimale Verteilung des Kunstharz-Bindemittels über die gesamte Oberfläche der Späne bzw. der Holzwerkstoffteilchen zu gewährleisten, konnte bislang trotz aller Bemühungen der Fachwelt nicht gefunden werden.

Durch die vorliegende Erfindung gelingt es nun, diese Aufgabe dadurch zu lösen, daß bei einem Verfahren zur Herstellung von Holzwerkstoff-Formkörpern, wobei zunächst ein kleinteiliges Holzmaterial, insbesondere Holzspäne, die beispielsweise durch Holzzerspanung gewonnen sind, mit wässrigen Lösungen oder Dispersionen härtbarer Kunstharz-Bindemittel behandelt werden, die erhaltene Masse verformt und dann unter Hitze und Druck ausgehärtet wird, erfindungsgemäß eine wässrige Kunstharz-Lösung oder -Dispersion verwendet wird, welche feinteilige, feste, anorganische und/oder organische Füllstoffe enthält. Dabei handelt es sich vorzugsweise um solche feste feinteilige Füllstoffe, die gegenüber dem Kunstharz-Bindemittel chemisch inert sind, d.h. um solche Füllstoffe der vorgenannten Art, welche die chemische Abbinde reaktion der Kunstharz-Bindemittel nicht behindern. Dabei können die feinteiligen, festen Füllstoffe sowohl in ständiger Dispersion gehalten sein als auch sedimentieren, sofern sie zum Anwendungszeitpunkt, d.h. zum Zeitpunkt des Aufbringens auf das kleinteilige Holzmaterial, ohne besondere Schwierigkeiten wieder redispergierbar sind. Das Aufbringen des wässrigen Kunstharz-Bindemittels auf die Späne kann in üblicher Weise, z.B. mit hochtourigen Turbomischern, erfolgen. Häufig werden die wässrigen Kunstharz-Bindemittel auf die Späne aber auch durch Bedüsen aufgebracht, und gerade für diesen Anwendungsfall ist die Verteilbarkeit der Füllmittel im wässrigen Träger angezeigt.

Zur Durchführung des Verfahrens können die für die Herstellung von Holzwerkstoff-Formkörpern üblichen Kunstharz-Bindemittel, wie beispielsweise Duroplaste, Phenoplaste, Isocyanate, vorzugsweise Bindemittel auf der Basis von Harnstoff-Formaldehydharzen, Phenol-Formaldehydharzen, Melaminharzen und dergl., verwendet werden. Üblicherweise werden Festharzmengen im Bereich von 6 - 12 %, insbesondere 8 - 10 %, bezogen auf atro Späne, eingesetzt. Die üblichen Flottenverhältnisse in der Größenordnung von 35 - 50, insbesondere 40 - 50 Gew.% Festharz, können auch im Rahmen der vorliegenden Erfindung angewandt werden.

Die Einarbeitung der Füllstoffe in die wässrige Leimflotte kann sowohl kontinuierlich als auch diskontinuierlich erfolgen. Dabei kann das Einmischen beispielsweise mit hochtourigen Rührwerken, unter Verwendung eines Ventourirohrs oder aber beispielsweise durch Anteigen des Füllstoffs mit einer Teilmenge des wässrigen Kunstharz-Bindemittels, unter anschließender Verdünnung mit der Hauptmenge des wässrigen Kunstharz-Bindemittels, erfolgen.

Durch den erfindungsgemäßen Gehalt an festen, feinteiligen Füllstoffen wird die Flotte gestreckt. Die Füllstoffe haben also zum Teil die Funktion eines Streckmittels. Füllstoffgehalte von 10 - 50, insbesondere 20 - 30 Gew.%, bezogen auf das Kunstharz-Bindemittel (Festharz), haben sich als geeignet erwiesen. Selbst im unteren Mengenbereich tritt schon eine gewisse Wirkung auf, was möglicherweise auf eine Verringerung des Wegschlagens des Kunstharz-Bindemittels zurückzuführen ist. Insoweit haben die Füllstoffe offenbar eine Trägerfunktion. Bezogen auf die Flotte kann der Gehalt an feinteiligen, festen Füllstoffen beispielsweise im Bereich von 5 - 15, insbesondere von 8 - 12 Gew.%, jeweils bezogen auf die Flotten, liegen.

Als anorganischer Füllstoff können Stoffe wie feinteiliges Calciumcarbonat, Gips, Tonerde oder anorganische Pigmente, Kaolin, Bariumsulfat und als organische Füllstoffe feinvermahlene ausgehärtete Duroplaste, Holzmehl und dergl. enthalten sein. Die Teilchengröße des überwiegenden Zahlenteils der Füllstoffe liegt meist unter 3 mm, insbesondere unter 1 mm und vorzugsweise zwischen etwa 0,1 - 1 mm.

Besonders bewährt hat sich die Durchführung des Verfahrens, wenn als Füllstoff mit gehärtetem Leim bzw. gehärtetem Kunstharz behafteter Holzschleifstaub, auch sogenannter Spanplattenstaub, verwendet wird. Dieser Schleifstaub fällt, namentlich beim Dickten-Schleifen von Spanplatten, bisweilen in Mengen bis zu 10 Gew.%, bezogen auf die fertigen Holzwerkstoffkörper, als Feingutabfall an. Da es sich um einen Schleifstaub handelt, der beim Schleifen von mit ausgehärtetem Leim bzw. Kunstharz-Bindemitteln gebundenen Holzwerkstoffkörpern anfällt, sind die so erhaltenen feinen Schleifstaubpartikel demzufolge auch mit ausgehärtetem Leim bzw. ausgehärteten Kunstharz-Bindemitteln beladen. Da dieses Material zudem aus einer Schicht stammt, die einer maximalen Temperaturbelastung während des Heißverpressens ausgesetzt ist, ist meist, abgesehen von dem Gehalt an ausgehärtetem Leim bzw. ausgehärtetem Kunstharz, auch der Holzanteil in Richtung auf eine Verhornung spürbar denaturiert. Ein solcher Schleifstaub unterscheidet sich also sowohl in physikalischer, struktureller und chemischer Hinsicht von üblichen Holzabfällen, wie Holzmehl, Holzschleifstaub, usw.

Überraschenderweise hat sich gezeigt, daß, wohl aufgrund dieser Sonderstellung dieser, ausgehärteten Leim bzw. Kunststoff enthaltende Schleifstaub, sich in besonderem Maß zur Durchführung des erfindungsgemäßen Verfahrens als Füllstoff eignet. Die Teilchengröße des Schleifstaubs liegt dabei zum größten Teil im allgemeinen im Bereich von 0,1 bis 1 mm, wenn auch Abweichungen davon keineswegs ausgeschlossen sind. Von wesentlicher Bedeutung ist hierbei, daß dieser Füllstoff in der Leim- bzw. Kunstharz-Bindemittel-Flotte praktisch keinen Leim bzw. ungehärtetes Kunstharz-Bindemittel aufnimmt, sondern der noch härtbare Leim bzw. das härtbare Kunstharz-Bindemittel praktisch völlig an der Oberfläche angeordnet bleibt.

Bei Verwendung dieses speziellen Schleifstaubs wird gleichzeitig noch eine andere Aufgabe, nämlich die wirtschaftlich sinnvolle Verwendung dieses bei der Herstellung von Holzwerkstoff-Formkörpern in erheblichen Mengen anfallenden Schleifstaubs, gelöst. Die Verwertung dieses Schleifstaubs ist ein ganz erhebliches Problem, zumal die Verheizung in Kesselhäusern aus Gründen sinnvoller Rohstoffausnutzung kaum vertretbar ist und andererseits der Bedarf an Holzwerkstoff-Formkörpern mit Schleifstauboberflächen nicht so groß ist, als daß diese in erheblichem Umfange anfallenden Schleifstaubmengen hierfür verbraucht werden könnten. Die erfindungsgemäße Verwertung des speziellen Schleifstaubs ist auch deswegen von Vorteil, weil es sich bei dem Schleifstaub um ein
Material handelt, das innerhalb der Betriebsstätte, in der
es anfällt, erfindungsgemäß auch wieder eingesetzt werden
kann und damit Verlade- und Transportprobleme, einschließlich
der dafür sonst entstehenden Kosten, entfallen. Bedeutend
ist jedoch die erfindungsgemäß ermöglichte erschöpfende
Auswertung des wertvollen Rohstoffs Holz im Sinne der Verhinderung der Bildung von Abfallprodukten. Vergleichsversuche
haben gezeigt, daß durch die erfindungsgemäße Zugabe von
Füllstoffen die Querzugsfestigkeit und Biegefestigkeit spürbar erhöht werden können und die Quellung erkennbar verringert wird.

Namentlich wird die Abhebefestigkeit deutlich erhöht. Dies
gilt in besonderem Maß bei Verwendung von mit ausgehärtetem
Leim bzw. ausgehärtetem Kunstharz beladenen Schleifstaub.
Dies ist umso erstaunlicher, weil eine Zugabe dieses Schleifstaubes zu dem normalen Spänematerial vor der Beleimung nachweislich zu einer Verschlechterung der technischen Werte der
Platte führt. Die Gründe hierfür können nur vermutet werden.
Die überraschenden Ergebnisse lassen eindeutig erkennen,
daß die gestellten Aufgaben, insbesondere eine verbesserte
gleichmäßige Verteilung der Kunstharz-Bindemittel über die gesamte Spanoberfläche unter Vermeidung eines Wegschlagens des Bindemittels, zumal noch, wenn hierbei betriebseigene, als Abfallstoffe betrachtete, Produkte, nämlich besagter Schleifstaub, verwendet werden, erfolgreich gelöst wurden.

Gegenstand der Erfindung sind auch die danach hergestellten Holzwerkstoff-Formkörper.

Die nachfolgenden Beispiele dienen der Erläuterung der Erfindung..

Beispiel 1

Einem Melamin-Harz-Mischkondensat mit einer Flottenkonzentration von 45 Gew.% für Deck- und Mittelschicht wurde eine wässrige Aufschlämmung von Bimsmehl in einem Flügelmischer so beigegeben, daß das Verhältnis Bimsmehl zu Festharz 1 : 4,5 betragen hat.

Aus Holz-Spänen, die mit diesem Bindemittelgemisch in einem Labormischer bedüst wurden, wurden Laborplatten 16 mm, Preßtemperatur 175°, Preßdruck 20 kg/cm$^2$, Preßzeit 6 Min., hergestellt.

Die Prüfergebnisse zeigten, gegenüber einer Nullplatte mit gleicher Beleimungsmenge von 9,4 bzw. 8,6 % Festharz, bezogen

- 11 -

auf atro Späne, jedoch ohne Bimsmehl-Zusatz, eine Verbesserung des Biege-Querzugs und Abhebefestigkeit von annähernd 20 %.

Beispiel 2

Einem Harnstoff-Formaldehyd-Harz mit einer Flottenkonzentration von 40 Gew.% Festharz für die Deckschicht und 45 Gew.% für die Mittelschicht, wurde jeweils über ein Ventourirohr 7,5 Gew.% Spanplattenschleifstaub, bezogen auf flüssiges Bindemittel, beigemischt und in Vorlaufbehältern unter ständigem langsamen Rühren bevorratet.

Aus diesen Behältern wurde das Bindemittelgemisch entsprechend der Spänedurchsatzmenge zu Turbomischern mit Außenbeleimung abgezogen.

Da zwischen Null-Platte und Versuchsplatte die gewichtsmäßige Leimdosierung nicht geändert wurde, ist bei den Versuchsplatten die eingesetzte Bindemittelmenge, bezogen auf Festharz, um 7,5 Gew.% verringert.

Mit den so beleimten Spänen wurden Holzspanplatten, 16 mm dick, als 3-Schichtenplatten auf einer Flexoplan-Mehretagen-Anlage mit einem max. Druck von 30 kp/cm$^2$ und einer Preßtemperatur von 175° C, sowie einem Zeitfaktor von 17 sec.

- 12 -

erzeugt.

Die dazugehörenden Prüfdaten sind in Tabelle 1 abzulesen.

| Press-Nr. | Art | kg/m$^3$ | Querzug N/mm$^2$ | Biegung N/mm$^2$ | Quellung 2h % | 24h % | De-Abhf. N/mm$^2$ | Feuchte % |
|---|---|---|---|---|---|---|---|---|
| 41 | Ohne Füllstoff Normalplatte | 637 | o,36 | 16,2 | 4,79 | 15,45 | o,79 | 8,3o |
| 44 | 7,5 % Füllstoff | 665 | o,48 | 17,5 | 4,34 | 15,34 | 1,17 | 9,89 |
| 45 | 7,5 % Füllstoff | 66o | o,4o | 17,4 | 4,13 | 15,63 | 1,o7 | 8,51 |
| 46 | 7,5 % Füllstoff | 675 | o,47 | 19,o | 5,43 | 16,17 | 1,16 | 7,94 |
| Mittelwerte: | | 666 | o,45 | 18,o | 4,63 | 15,71 | 1,13 | 8,78 |

DR. BERG    DIPL.-ING. STAPF
DIPL.-ING. SCHWABE    DR. DR. SANDMAIR    **0056935**
PATENTANWÄLTE
Postfach 86 02 45 · 8000 München 86

Anwaltsakte 50 232

-1-

P a t e n t a n s p r ü c h e :

1. Verfahren zur Herstellung von Holzwerkstoff-Formkörpern unter Behandlung kleinteiligen Holzmaterials mit kollo- idalen wäßrigen Lösungen oder Dispersionen härtbarer Kunstharze, Verformen des behandelten Materials und Aushärten unter Hitze und Druck, d a d u r c h  g e k e n n - z e i c h n e t , daß die wässrigen Kunstharzlösungen oder -Dispersionen anorganische und/oder organische Füllstoffe in feinverteilter Form enthalten.

2. Verfahren gemäß Patentanspruch 1, d a d u r c h g e k e n n z e i c h n e t , daß die Füllstoffe gegen- über dem Kunstharzbindemittel chemisch inert sind.

3. Verfahren gemäß Patentanspruch 1 oder 2, d a - d u r c h  g e k e n n z e i c h n e t , daß die Füll- stoffe in einer Menge von 10 - 50, insbesondere 20 - 30 Gew.%, bezogen auf das Kunstharzbindemittel (Fest-

IV/st

☎ (089) 98 82 72
98 82 73
98 82 74

Telegramme:
BERGSTAPFPATENT München
TELEX:

Bankkonten: Hypo-Bank München 4410122850
(BLZ 700 200 11) Swift Code HYPO DE MM
Bayer. Vereinsbank München 453100 (BLZ 700 202 70)

- 2 -

harz) enthalten sind.

4. Verfahren gemäß einem der vorhergehenden Patentansprüche, d a d u r c h   g e k e n n z e i c h n e t , daß die Füllstoffe zum ganz überwiegenden Teil eine Teilchengröße von < 3 mm, insbesondere < 1 mm, vorzugsweise zum überwiegenden Teil eine Teilchengröße im Bereich von 0,1 - 1 mm haben.

5. Verfahren gemäß einem der vorhergehenden Patentansprüche, d a d u r c h   g e k e n n z e i c h n e t , daß als organische Füllstoffe feinteilige Holzabfälle enthalten sind.

6. Verfahren gemäß einem der vorhergehenden Patentansprüche, d a d u r c h   g e k e n n z e i c h n e t , daß als organischer Füllstoff ausgehärtetes Bindemittel enthaltender Holzschleifstaub, insbesondere Spanplattenschleifstaub, verwendet wird.

7. Holzwerkstoff-Formkörper, insbesondere Spanplatten, hergestellt nach einem der vorhergehenden Patentansprüche.

## Europäisches Patentamt

## EUROPÄISCHER RECHERCHENBERICHT

| | EINSCHLÄGIGE DOKUMENTE | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | B 29 J 5/02 |
| X | <u>DE - A - 2 133 045</u> (BASF)<br>* Seite 1, Zeilen 18-25 *<br><br>-- | 1,2,5,<br>6 | |
| A | <u>DE - C - 902 550</u> (M. HIMMELHEBER <u>UND K. STEINER)</u><br>* Ansprüche 1,3,4 *<br><br>-- | | |
| A | <u>DD - A - 32 449</u> (H. FLEMMING)<br>* Spalte 4, Zeilen 31-35 *<br><br>---- | | |

### RECHERCHIERTE SACHGEBIETE (Int. Cl.³)

B 29 J 5/00
        5/02

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-02-1982 | BRUCK |

EPA form 1503.1   06.78